# EUROPÄISCHE PATENTSCHRIFT

(11) **EP 2 981 475 B1**
(45) Veröffentlichungstag und Bekanntmachung des Hinweises auf die Patenterteilung: **28.02.2018**
(21) Anmeldenummer: 14717979.0
(22) Anmeldetag: 21.03.2014
(51) Int. Cl.: B65D 17/00, G06K 19/077

(54) **DOSE, INSBESONDERE GETRÄNKEDOSE**
CAN, IN PARTICULAR BEVERAGE CAN
CANETTE, EN PARTICULIER CANETTE POUR BOISSONS

(30) Priorität: 04.04.2013 AT 502302013
(43) Veröffentlichungstag der Anmeldung: 10.02.2016
(73) Patentinhaber: Seibersdorf Labor GmbH, 2444 Seibersdorf (AT)
(72) Erfinder: SCHMID, Gernot, A-2833 Bromberg (AT)
(74) Vertreter: Wildhack & Jellinek
(86) Internationale Anmeldenummer: PCT/AT2014/050070
(87) Internationale Veröffentlichungsnummer: WO 2014/161021

(56) Entgegenhaltungen:
- WO-A1-2012/102759
- DE-A1- 10 344 270
- JP-A- 2010 001 074
- JP-A- 2010 004 523

## Beschreibung

Die Erfindung betrifft eine neue Dose, insbesondere Getränkedose, umfassend einen Körper, insbesondere aus Aluminium, wobei auf einer Stirnwand der Dose ein Verschlussbereich durch eine Sollbruchkante zumindest teilweise abgegrenzt ist und wobei die Dose ein Öffnungselement, insbesondere einen Ringbügel, aufweist, welches in seiner Ausgangslage an der Stirnwand der Dose zumindest teilweise flächig anliegt und mit der Stirnwand an zumindest einer Stelle mittels eines Verbindungselements verbunden ist, das als Teil des Öffnungselements ausgebildet und mit der Stirnwand verbunden ist,
- wobei bei Anheben bzw. Aufschwenken des Öffnungselements von der Stirnwand der Dose weg nach oben hin, also von der Ausgangslage in die Öffnungslage der Verschlussbereich an der Sollbruchkante abreißt und in dem von der Sollbruchkante umgrenzten Bereich die Öffnung der Dose für das Entleeren von deren Inhalt ausgebildet wird,
- wobei weiters das Öffnungselement der Dose einen ringartig in sich geschlossenen Trägerkörper umfasst, und vorzugsweise selbst als solcher ausgebildet ist, welcher insgesamt oder in einem Teilbereich aus einem elektrisch leitfähigen Material, insbesondere aus Metall, besteht, und in der wie oben genannten Ausgangslage des Öffnungselements elektrisch ringartig in sich geschlossen ist, und
- an bzw. in welchem Trägerkörper eine Antenne und ein an dieselbe angeschlossener Transponderchip angeordnet ist.

Aus dem Stand der Technik ist eine Vielzahl von Getränkedosen bekannt, die mittels eines Einmalverschlusses geöffnet werden können, wobei mit dem Öffnen jeweils ein Verschlussbereich aus dem Körper der Dose herausgebrochen wird, sodass der Inhalt der Dose aus derselben entleert werden kann.

Es ist gemäß dem Stand der Technik auch möglich, an Gegenständen, insbesondere auch an Dosen, RFID-/NFC-Antennen und RFID-/NFC-Transponder anzuordnen, um mittels eines externen Datenkommunikationsgerätes Daten, die im Transponder abgespeichert sind, an das externe Kommunikationsgerät zu übertragen.

Die DE 103 44 270 A1 offenbart eine Dose aus Aluminium, wobei auf deren Stirnwand der Dose ein Verschlussbereich mittels Sollbruchkante abgegrenzt ist und sie als Öffnungselement einen Ringbügel aufweist, welcher in Ausgangslage an der Dosenstirnwand flächig anliegt und mit ihr mittels Verbindungselement verbunden ist,
- wobei bei Anheben des Öffnungselements von der Ausgangslage in die Öffnungslage der Verschlussbereich and der Sollbruchkante abreißt und eine Öffnung der Dose ausgebildet wird,
- wobei das Öffnungselement einen ringartig geschlossenen Trägerkörper umfasst oder als solcher ausgebildet ist, welcher zumindest teilweise aus Metall, besteht, und in der Ausgangslage des Öffnungselements elektrisch ringartig in sich geschlossen ist, und in welchem Trägerkörper eine Antenne und ein an dieselbe angeschlossener Transponderchip angeordnet sind.

Aus dem Stand der Technik ist jedoch keine Möglichkeit bekannt, dass Daten ausschließlich dann von einem Behältnis an ein externes Datenkommunikationsgerät übertragbar sind, wenn ein Einmalverschluss auf dem Behältnis geöffnet worden ist. Eine solche Vorrichtung könnte beispielsweise dazu verwendet werden, bestimmte, im Transponder abgespeicherte Informationen nur demjenigen zugänglich zu machen, der die jeweilige Dose bzw. den jeweiligen Behälter erworben hat. Typischerweise kann eine solche Dose vorteilhaft für Gewinnspiele eingesetzt werden, bei denen es erforderlich ist, dass der jeweilige Mitspieler die Dose gekauft bzw. geöffnet hat.

Aufgabe der Erfindung ist es somit, eine Dose, insbesondere eine Getränkedose, zur Verfügung zu stellen, mit der Daten von einem an der Dose angeordneten Transponder an ein externes Datenkommunikationsgerät erst dann übertragbar sind, wenn die jeweilige Dose geöffnet ist und/oder mit einem externen Datenkommunikationsgerät auf einem auf der Dose angeordneten Transponder erst dann Daten abgespeichert werden können, wenn die jeweilige Dose geöffnet ist.

Gegenstand der Erfindung ist somit eine Dose der eingangs genannten Art, welche dadurch gekennzeichnet ist,
- dass bei Einwirkung eines, beispielsweise von einem externen Datenkommunikationsgerät ausgesandten, magnetischen Wechselfeldes von außen her in dem sich in der Ausgangslage befindlichen Trägerkörper Ströme in einem Ausmaß induzierbar sind, durch welche bzw. welches das genannte, von außen her einwirkende magnetische Wechselfeld derart abschwächbar ist, dass die durch dasselbe induzierte elektrische Spannung für die Aktivierung des Transponderchips zu gering ist und eine solche nicht erfolgt bzw. verhindert wird,
- dass aber nach Anheben und Aufschwenken des Öffnungselements/Trägerkörpers von der Stirnwand der Dose nach oben im Zuge des Öffnens derselben der elektrische Ringschluss im Trägerkörper irreversibel derart veränderbar ist, insbesondere unterbrochen und somit aufgehoben wird, dass die durch das von außen her einwirkende magnetische Wechselfeld im Trägerkörper induzierten Ströme nicht mehr in dem für eine wie oben angesprochene Verhinderung der Aktivierung des Transponderchips ausreichenden Ausmaß der Stärke und/oder Verteilung ausbildbar sind.

Es ist also bei der neuen Dose dafür gesorgt, dass eine Datenkommunikation zwischen dem auf der Dose angeordneten Transponder und einem externen Datenkommunikationsgerät erst dann möglich ist, wenn die Dose geöffnet ist. Eine Datenkommunikation ist jedoch nicht möglich, solange das leitfähige Öffnungselement den elektrischen Ringschluss aufweist, also solange die Dose noch nicht geöffnet worden ist.

Die Kommunikation zwischen dem auf der Dose angeordneten Transponder und einem externen Datenkommunikationsgerät ist also wirksam vermieden, solange der elektrische Leitfähigkeits-Ringschluss im Öffnungselement bzw. in dem von denselben getragenen oder durch es selbst gebildeten Trägerkörper aufrecht erhalten bleibt, denn dann verursacht das von einem Datenkommunikationsgerät ausgesandte elektromagnetische Wechselfeld innerhalb des elektrisch leitfähigen, z.B. aus Stahlblech bestehenden Öffnungselementes/Trägerkörpers Wirbelströme, durch welche eine Aktivierung des Transponders effektiv verhindert wird, solange die Dose im ursprünglichen Zustand vorliegt, also nicht geöffnet ist.

Wenn ein Anheben bzw. Aufschwenken des Öffnungselementes/Trägerkörpers von der Stirnwand der Dose nach oben hin in Zuge des Öffnens der Dose erfolgt, so ist erfindungsgemäß dafür gesorgt, dass durch die mechanisch irreversible Veränderung des leitfähigen Öffnungselementes/Trägerkörpers der vorher bestandene elektrische Leitfähigkeits-Ringschluss aufgehoben wird und nicht mehr besteht.

Dadurch kann es bei Einwirkung eines Wechsel-Magnetfeldes nicht mehr zur Ausbildung von störendem starken Wirbelströmen im leitfähigem Öffnungselement /Trägerkörper kommen und das, beispielsweise von einem Datenkommunikationsgerät ausgesandte, elektromagnetische Wechsel-Magnetfeld hat genügend Stärke bzw. Intensität, die ausreicht, um den Transponder anzusprechen bzw. aktivieren und die in ihm gespeicherte Information abrufbar zu machen.

Die Möglichkeiten, den mechanischen und damit auch den elektrischen Ringschluss im Öffnungselement/Trägerkörper zu verändern, also insbesondere zu unterbrechen, sind an sich mannigfaltig.

Als gegenüber mechanischen Störungen besonders wenig empfindliche wurde eine vorteilhafte Ausführungsform von Dose und Öffnungsmechanismus gefunden, gemäß welcher vorgesehen ist, dass das/der ringartig in sich geschlossene Öffnungselement/Trägerkörper mit einer in der Ausgangslage den elektrischen Ringschluss desselben gewährleistenden unversehrten, elektrisch leitfähig bleibenden Sollbruchstelle ausgebildet ist, welche bei Betätigung des Öffnungselements durch Aufschwenken von der Stirnwand der Dose nach oben zur Unterbrechung und somit Aufhebung bzw. Vernichtung des elektrischen Ringschlusses infolge Bruches der Sollbruchstelle durch die beim Abheben des Öffnungselements von der Dosen-Stirnwand im Zuge des Öffnens der Dose auftretenden mechanischen Kräfte führt.

Als in dem oben genannten Sinne günstig hat sich weiters eine Ausführungsvariante der neuen Dose erwiesen, gemäß welcher das/der ringartig in sich geschlossene Öffnungselement/Trägerkörper eine, vorzugsweise schlitz- oder spaltartige, Unterbrechung aufweist, welche in dessen Ausgangslage durch ein leitfähiges Überbrückungselement, wie insbesondere mittels eines kurzen, in Folge der Kraftanwendung bei Betätigung des Öffnungselements im Zuge des Öffnens der Dose selbst zerreißenden oder abreißenden und hierbei den Ringschluss aufhebenden bzw. eliminierenden Leiter- oder Lötmetallstückes oder einer derartigen Leiterbrücke aus einem/einer leitfähigen Kleber, Paste oder Farbe überbrückt ist.

Etwas subtiler und komplizierter, jedoch besonders sicher funktionierend, ist eine Ausführungsform der neuen Dose , die so gestaltet ist,
- dass das/der ringartig in sich geschlossene Öffnungselement/ eine, vorzugsweise schlitz- oder spaltartige Unterbrechung aufweist, welche in dessen Ausgangslage mittels eines leitfähigen Überbrückungselements, wie insbesondere eines Leiter- oder Lötmetallstückes, oder einer derartigen Leiterbrücke aus einem/einer leitfähigen Kleber, Pasten oder Farbe überbrückt ist, welches Überbrückungselement seinerseits über ein gespanntes zug- und reißfestes Zugorgan, wie insbesondere Faden, Draht, Kettchen oder Band mit der stabilen Stirnwand, insbesondere mit dem Verbindungselement zwischen Dose und Öffnungselement verbunden ist, und
- dass mit dem Verbindungsstück bei Betätigung des Öffnungselements bei dessen Aufschwenken von der Stirnwand der Dose nach oben hin im Zuge des Öffnens derselben das leitfähige Überbrückungselement aus seiner, den elektrischen Ringschluss gewährleistenden Überbrückungsposition herauszieht und entfernt, wodurch der elektrische Ringschluss innerhalb des Öffnungselements/Trägerkörpers aufgehoben bzw. eliminiert wird.

In Folge der bei Einwirkung eines magnetischen Wechselfeldes im ringartig in sich geschlossenen Öffnungselement dort auftretenden Wirbelströme wird die Einkoppelung von elektromagnetischen Feldern in die Antenne unterdrückt oder zumindest hinreichend geschwächt, so dass keine Datenkommunikation zwischen dem auf der Dose angeordneten Transponder und einem externen Datenkommunikationsgerät möglich ist.

Um diese Kommunikation zwischen externem Datenkommunikationsgerät und Transponder zu ermöglichen, wird erfindungsgemäß dafür gesorgt, dass der mechanische Ringschluss im leitfähigen Material des Öffnungselementes/Trägerkörpers unterbrochen wird, indem durch das Anheben bzw. Aufschwenken desselben beim Öffnen der Dose eine mechanische Aufsprengung des durch das/denselbe(n) gebildeten Ringobjekts erfolgt, wonach kein in sich geschlossener Stromkreis mehr gegeben ist, wodurch die beschriebenen Wirbelströme nur mehr äußerst gering sein können. Damit wird erreicht, dass das von außen einwirkende magnetische Wechselfeld ausreichend stark ist, dass die Antenne elektromagnetische Felder, die auf sie gerichtet sind, in einer für die drahtlose Datenkommunikation ausreichenden Form und Intensität empfängt und an den Transponderchip weitergibt.

Gemäß einer herstellungstechnisch bevorzugten Variante ist es bevorzugt, wenn die Antenne und der Transponderchip auf einer gemeinsamen Folie, insbesondere auf einem gemeinsamen Klebeetikett, angeordnet sind, die oder das auf dem Öffnungselement angeordnet, insbesondere aufgeklebt ist.
Um eine Abschirmung oder Verdrängung von auf die Antenne gerichteten elektromagnetischen Wellen in der Öffnungslage wirksam zu vermeiden, kann günstiger Weise vorgesehen sein, dass bei einer Übertragungsfrequenz des Transponderchips im Bereich zwischen 100 kHz und 1000 MHz, insbesondere im Bereich von 120-135 kHz, im Bereich von 13 bis 14 MHz oder im Bereich von 860-910 MHz die spezifische elektrische Leitfähigkeit des Trägermaterials des Öffnungselements größer ist als 1 S/m, und/oder
- dass die elektrische Permittivität des Trägermaterials des Öffnungselements/Trägerkörpers kleiner ist als 100*8,854*10⁻¹² Farad pro Meter (As/Vm).

Eine besonders einfach herzustellende Ausführungsform der Erfindung sieht vor, dass der Verschlussbereich und die Sollbruchkante an einer Stirnwand der Dose ausgebildet sind.

Eine besonders vorteilhafte Anordnung, mit der ein effektives Aufschwenken des Öffnungselementes möglich ist, sieht vor, dass das Öffnungselement über eine Niete mit der Dose verbunden ist, wobei das Öffnungselement einen in seiner Ausgangslage am Verschlussbereich anliegenden Druckbereich zum Eindrücken des Verschlussbereichs aufweist.

Um die Dose einfach zu öffnen, kann hierbei vorgesehen sein, dass das Öffnungselement einen dem Druckbereich gegenüberliegenden Betätigungsbereich aufweist, wobei der Druckbereich und der Betätigungsbereich durch die Niete voneinander abgegrenzt sind und gemeinsam wie ein zweiarmiger, durch die Niete angelenkter Hebel wirken.

Eine besonders einfache mechanische Ausgestaltung, die ein gutes Verschwenken des Öffnungselementes gegenüber der Dose ermöglichst, sieht vor, dass das Öffnungselement ein gegenüber seinem Körper verschwenkbares Verbindungselement aufweist, das mittels Niete mit der Wand der Dose verbunden ist.

Eine besonders einfache Positionierung des Transponders kann dadurch erreicht werden, dass in Ausgangslage des Öffnungselements/Trägerkörpers der Transponderchip in einem Bereich desselben angeordnet ist, der am Verschlussbereich anliegt.

Von besonderen Vorteil, insbesondere bei Übertragungsfrequenzen im Bereich von 10 bis 15 MHz ist es, wenn die Antenne ringförmig ausgebildet ist und insbesondere entlang der Umfangskante des Öffnungselements in einer Einkerbung desselben angeordnet ist.

Anhand der Zeichnung wird die Erfindung näher erläutert:
Es zeigen die Fig. 1 und 2 grundsätzlich die neue Dose, insbesondere Getränkedose, die Fig. 3 und 4 zwei wesentliche Ausführungsvarianten der Stirnwand der neuen Dose jeweils im nicht geöffneten Zustand und die Fig. 5 bis 7 eine weitere Variante der Stirnwand der erfindungsgemäßen Dose im ungeöffneten Zustand, während des Öffnens und im Zustand des völligen Geöffnetseins jeweils im Detail.

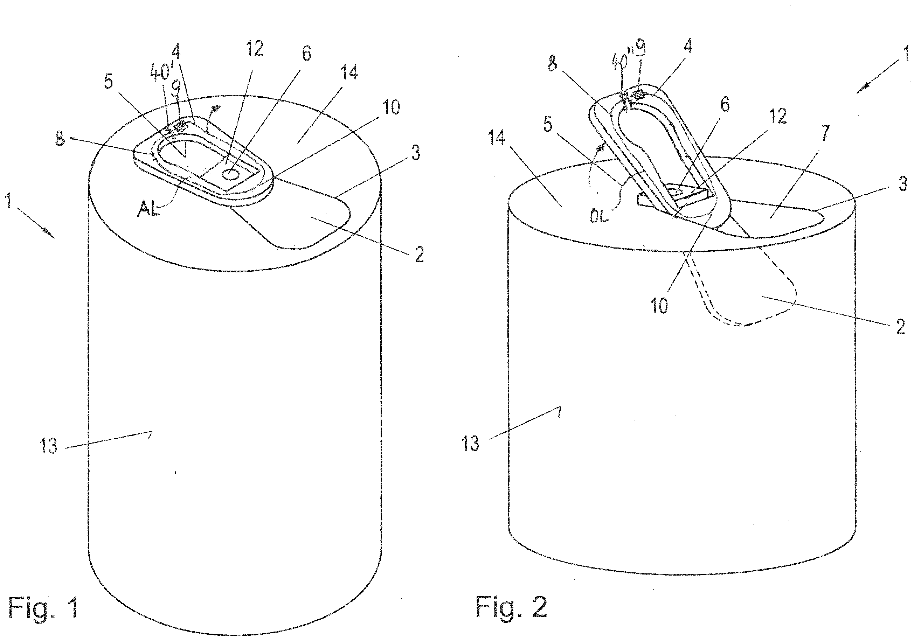

In **Fig. 1** ist eine zylindrische Dose 1 gemäß einem bevorzugten Ausführungsbeispiel der Erfindung dargestellt. Der Körper der Dose 1 besteht zur Gänze aus Aluminium, wobei die Dose 1 auf ihrer Mantelfläche 13 eine Bedruckung oder eine bedruckte, dekorative Folie aufweisen kann. Auf der oberen Stirnwand 14 der Dose 1 ist der Verschlussbereich 2 vorgesehen, der durch eine Sollbruchkante 3 abgegrenzt ist. Ferner weist die Dose 1 das Öffnungselement 4 - hier in Ausgangslage AL - auf, das über eine eine Ausnehmung des Öffnungselementes 4 durchsetzende Niete 6 mit der Stirnwand 14 der Dose 1 verbunden ist. Grundsätzlich reicht es aus, wenn das Öffnungselement 4 aus einem elektrisch leitfähigen Material, z.B. aus Stahlblech gefertigt ist und im Wesentlichen eine Art in sich geschlossene Ringform aufweist, in welcher ein von außen appliziertes elektromagnetisches Feld des Öffnungselementes 4 die Ausbildung von Wirbelströmen bewirkt, sodass eine drahtlose elektromagnetische Datenübertragung zwischen einer im bzw. am Öffnungselement 4 angeordneten Antenne 8 mit an sie angeschlossenem Transponderchips (9) und einem externen Datenkommunikationsgerät nicht möglich ist. Das Öffnungselement 4 verfügt über ein gegenüber dem Körper der Dose 1 verschwenkbares Verbindungselement 12, das mittels der Niete 6 mit der Stirnwand 14 der Dose 1 verbunden ist und das üblicherweise an der Stirnwand 14 der Dose 1 flächig anliegt. Üblicherweise lässt sich das Öffnungselement 4 um die Achse der Niete 6 drehen, es liegt im vorliegenden Ausführungsbeispiel keine bewegungsstarre Verbindung des Öffnungselements 4 mit der Dose 1 vor.

Das Öffnungselement 4 weist einen Druckbereich 10 und andersseitig ein latentes Unterbrechungselement 40' auf, durch welches dafür gesorgt werden kann, dass beim Anheben oder Aufschwenken desselben nach oben die oben genannte "Ringform" in irgendeiner Weise aufgesprengt wird.

Die Fig. 2 zeigt - bei sonst gleich bleibenden Bezugszeichenbedeutungen - die in Fig. 1 gezeigte Dose 1 im nun geöffneten Zustand, also in Öffnungslage OL. Ein dem Verschlussbereich 2 abgewandter Betätigungsbereich 11 des Öffnungselementes 4 ist nun angehoben und das gesamte Öffnungselement 4 ist nun in die Öffnungslage OL verschwenkt. Hierdurch wird der am Verschlussbereich 2 anliegende Druckausübungsbereich 10 des Öffnungselementes 4 in Richtung des Verschlussbereiches 2 ins Innere der Dose 1 gedrückt, wodurch der Verschlussbereich 2 entlang der Sollbruchkante 3 von der Stirnwand 14 der Dose 1 abreißt und in die Dose 1 hinein gebogen wird. Hierdurch wird die Öffnung 7 geschaffen, aus welcher der Inhalt der Dose 1 geleert werden kann.

Angedeutet ist dort, dass das vorher ein geschlossenes "Ringelement" darstellende Öffnungselement 4 infolge des Bruches des Unterbrechungselementes 40'zu einem echten Spalt 40" nicht mehr in sich geschlossen ist, sodass in demselben bei Einwirkung eines elektromagnetischen Wechselfeldes von außen her im Wesentlichen keine Wirbelströme mehr auftreten können.

Der an die Antenne 8 angeschlossene Transponderchip 9 kann also mit einem Datenkommunikationsgerät in Kontakt treten.

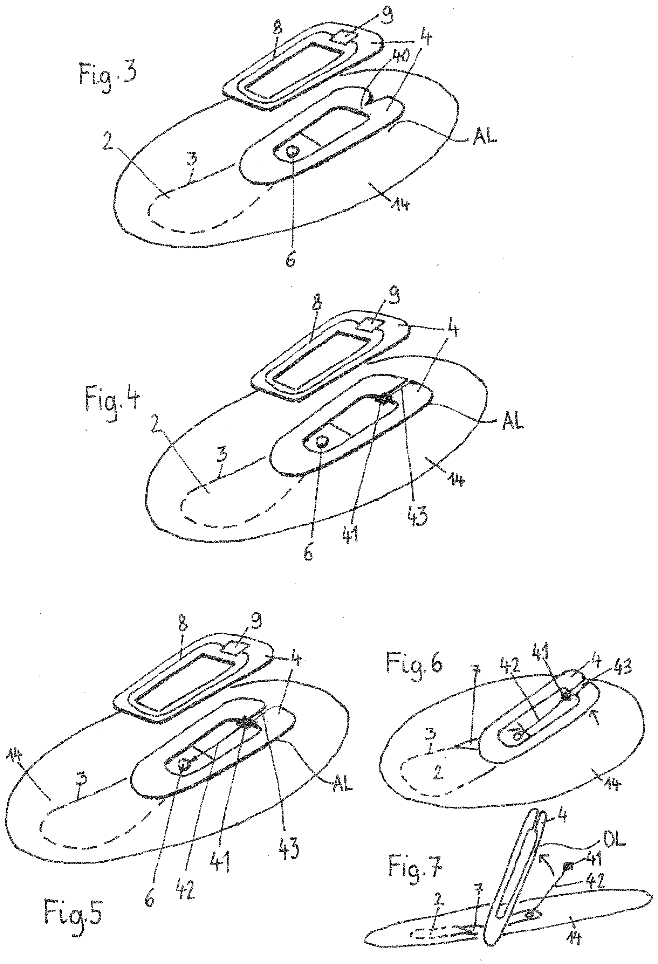

Die Fig. 3 zeigt - bei sonst gleich bleibenden Bezugszeichenbedeutungen - ein erfindungsgemäßes elektrisch leitendes Dosen-Öffnungselement 4 mit dem hier in Form einer (Klebe-)Folie als Trägerkörper ausgebildeten in sich geschlossenen, auch nach Zerstörung des durch das Öffnungselement 4 in Ausgangslage AL erhalten bleibenden Antennen 8 - Transponderchip 9 - Kreis.

Gezeigt ist dort die Schwächungsstelle bzw. die Sollbruchstelle 40 des Öffnungselementes 4, welche bei Aufschwenken desselben bricht, wodurch eine strikte Unterbrechung des ringartig in sich geschlossenen, durch das Öffnungselement 4 vorhergegebenen Leiterkreises eintritt, sodass das Auftreten von Wirbelströmen innerhalb desselben bei Einwirkung eines elektromagnetischen Wechselfeldes zumindest in hohem Maße unterbunden ist.

Der Fig. 4 ist - bei sonst gleich bleibenden Bezugszeichenbedeutungen - zu entnehmen, dass das Öffnungselement 4 schon in der Ausgangslage AL eine materielle Unterbrechung durch einen durchgehenden Spalt 43 aufweist, der allerdings in dieser Ausgangslage mittels leitfähigen Überbrückungselementes 41, also z.B. mittels eines leitfähigen Metallstücks, Lötmetall-, Farb- oder Kleberpfropfens od. dgl. überbrückt ist.

Erst, wenn das Öffnungselement 4 aufgeschwenkt wird - wie durch einen Pfeil angedeutet - bricht das Überbrückungselement 40 auseinander, der Spalt 43 vervollständigt sich und der Leitfähigkeitsring ist materiell unterbrochen, womit das Auftreten von störenden Wirbelströmen hintangehalten ist.

Die Fig. 5 bis 7 zeigen - bei sonst gleich bleibenden Bezugszeichenbedeutungen - eine andere Art des Entfernens eines leitfähigen Überbrückungselementes 41 aus dem schon vornherein gegebenen Spalt 43 des Öffnungselementes 4: Hier ist ein dehnungs- und reißfester Draht 42 als Zugorgan vorgesehen, das die Dosenstirnwand 14 mit dem Überbrückungselement 1 verbindet. Wird nun das Öffnungselement 4 angehoben und gelangt über die Zwischenlage ZL der Fig. 6 zur Öffnungslage OL der Fig. 7, so wird mittels des Drahtes 42 das leitende Element 42 aus dem Spalt 43 des Öffnungselementes 4 herausgezogen und so der durch dasselbe vorher gebildet gewesene Leiterkreis unterbrochen, wie die Fig. 7 zeigt.

## Patentansprüche

1. Dose (1), insbesondere Getränkedose, umfassend einen Körper, insbesondere aus Aluminium, wobei auf einer Stirnwand (14) der Dose (1) ein Verschlussbereich (2) durch eine Sollbruchkante (3) zumindest teilweise abgegrenzt ist und wobei die Dose (1) ein Öffnungselement (4), insbesondere einen Ringbügel, aufweist, welches in seiner Ausgangslage (AL) an der Stirnwand (14) der Dose (1) zumindest teilweise flächig anliegt und mit der Stirnwand (14) an zumindest einer Stelle mittels eines Verbindungselements (12) verbunden ist, das als Teil des Öffnungselements (4) ausgebildet und mit der Stirnwand (14) verbunden ist,
- wobei bei Anheben bzw. Aufschwenken des Öffnungselements (4) von der Stirnwand (14) der Dose (1) weg nach oben hin, also von der Ausgangslage (AL) in die Öffnungslage (OL) der Verschlussbereich (2) an der Sollbruchkante (3) abreißt und in dem von der Sollbruchkante (3) umgrenzten Bereich die Öffnung (7) der Dose (1) für das Entleeren von deren Inhalt ausgebildet wird,
- wobei weiters das Öffnungselement (4) der Dose (1) einen ringartig in sich geschlossenen Trägerkörper umfasst, und vorzugsweise selbst als solcher ausgebildet ist, welcher insgesamt oder in einem Teilbereich aus einem elektrisch leitfähigen Material, insbesondere aus Metall, besteht, und in der wie oben genannten Ausgangslage (AL) des Öffnungselements (4) elektrisch ringartig in sich geschlossen ist, und
- an bzw. in welchem Trägerkörper eine Antenne (8) und ein an dieselbe angeschlossener Transponderchip (9) angeordnet ist,
**dadurch gekennzeichnet,**
- **dass** bei Einwirkung eines, beispielsweise von einem externen Datenkommunikationsgerät ausgesandten, magnetischen Wechselfeldes von außen her in dem sich in der Ausgangslage (AL) befindlichen Trägerkörper Ströme in einem Ausmaß induzierbar sind, durch welche bzw. welches das genannte, von außen her einwirkende magnetische Wechselfeld derart abschwächbar ist, dass die durch dasselbe induzierte elektrische Spannung für die Aktivierung des Transponderchips (9) zu gering ist und eine solche nicht erfolgt bzw. verhindert wird,
- **dass** aber nach Anheben und Aufschwenken des Öffnungselements/Trägerkörpers (4) von der Stirnwand (14) der Dose (1) nach oben im Zuge des Öffnens derselben der elektrische Ringschluss im Trägerkörper irreversibel derart veränderbar ist, insbesondere unterbrochen und somit aufgehoben wird, dass die durch das von außen her einwirkende magnetische Wechselfeld im Trägerkörper induzierten Ströme nicht mehr in dem für eine wie oben angesprochene Verhinderung der Aktivierung des Transponderchips (9) ausreichenden Ausmaß der Stärke und/oder Verteilung ausbildbar sind.

2. Dose nach Anspruch 1, **dadurch gekennzeichnet, dass** das/der ringartig in sich geschlossene Öffnungselement/Trägerkörper (4) mit einer in der Ausgangslage (AL) den elektrischen Ringschluss desselben gewährleistenden unversehrten, elektrisch leitfähig bleibenden Sollbruchstelle (40) ausgebildet ist, welche bei Betätigung des Öffnungselements (4) durch Aufschwenken von der Stirnwand (14) der Dose (1) nach oben zur Unterbrechung und somit Aufhebung bzw. Vernichtung des elektrischen Ringschlusses infolge Bruches der Sollbruchstelle durch die beim Abheben des Öffnungselements (4) von der Dosen-Stirnwand (14) im Zuge des Öffnens der Dose (1) auftretenden mechanischen Kräfte führt.

3. Dose nach Anspruch 1, **dadurch gekennzeichnet, dass** das/der ringartig in sich geschlossene Öffnungselement/Trägerkörper (4) eine, vorzugsweise schlitz- oder spaltartige, Unterbrechung (43) aufweist, welche in dessen Ausgangslage (AL) durch ein leitfähiges Überbrückungselement (41), wie insbesondere mittels eines kurzen, in Folge der Kraftanwendung bei Betätigung des Öffnungselements (4) im Zuge des Öffnens der Dose (1) selbst zerreißenden oder abreißenden und hierbei den Ringschluss aufhebenden bzw. eliminierenden Leiter- oder Lötmetallstückes oder einer derartigen Leiterbrücke aus einem/einer leitfähigen Kleber, Paste oder Farbe überbrückt ist.

4. Dose nach Anspruch 1 oder 3, **dadurch gekennzeichnet,**
- **dass** das/der ringartig in sich geschlossene Öffnungselement/Trägerkörper (4) eine, vorzugsweise schlitz- oder spaltartige Unterbrechung (43) aufweist, welche in dessen Ausgangslage (AL) mittels eines leitfähigen Überbrückungselements (41), wie insbesondere eines Leiter- oder Lötmetallstückes, oder einer derartigen Leiterbrücke aus einem/einer leitfähigen Kleber, Pasten oder Farbe überbrückt ist, welches Überbrückungselement (41) seinerseits über ein gespanntes zug- und reißfestes Zugorgan (42), wie insbesondere Faden, Draht, Kettchen oder Band mit der stabilen Stirnwand (14), insbesondere mit dem Verbindungselement (12) zwischen Dose (1) und Öffnungselement (4) verbunden ist, und
- **dass** mit dem Verbindungsstück (42) bei Betätigung des Öffnungselements (4) bei dessen Aufschwenken von der Stirnwand (14) der Dose (1) nach oben hin im Zuge des Öffnens derselben das leitfähige Überbrückungselement (41) aus seiner, den elektrischen Ringschluss gewährleistenden Überbrückungsposition herauszieht und entfernt, wodurch der elektrische Ringschluss innerhalb des Öffnungselements/Trägerkörpers (4) aufgehoben bzw. eliminiert wird.

5. Dose (1) nach einem der Ansprüche 1 bis 4, **dadurch gekennzeichnet, dass** die Antenne (8) und der Transponderchip (9) auf einer gemeinsamen Folie, insbesondere auf einem gemeinsamen Klebeetikett (18), angeordnet sind, die oder das auf dem Öffnungselement (4) angeordnet, insbesondere aufgeklebt ist.

6. Dose (1) nach einem der Ansprüche 1 bis 5, **dadurch gekennzeichnet, dass** bei einer Übertragungsfrequenz des Transponderchips (9) im Bereich zwischen 100 kHz und 1000 MHz, insbesondere im Bereich von 120-135 kHz, im Bereich von 13 bis 14 MHz oder im Bereich von 860-910 MHz die spezifische elektrische Leitfähigkeit des Trägermaterials des Öffnungselements (4) größer ist als 1 S/m, und/oder
- dass die elektrische Permittivität des Trägermaterials des Öffnungselements/Trägerkörpers (4) kleiner ist als 100*8,854*10⁻¹² Farad pro Meter (AS/Vm).

7. Dose (1) nach einem der Ansprüche 1 bis 6, **dadurch gekennzeichnet, dass** der Verschlussbereich (2) und die Sollbruchkante (3) an einer Stirnwand (14) der Dose (1) ausgebildet sind.

8. Dose (1) nach einem der vorangehenden Ansprüche 1 bis 7, **dadurch gekennzeichnet, dass** das Öffnungselement (4) über eine Niete (6) mit der Dose (1) verbunden ist, wobei das Öffnungselement (4) einen in seiner Ausgangslage (AL) am Verschlussbereich (2) anliegenden Druckbereich (10) zum Eindrücken des Verschlussbereichs (2) aufweist.

9. Dose (1) nach Anspruch 8, **dadurch gekennzeichnet, dass** das Öffnungselement (4) einen dem Druckbereich (10) gegenüberliegenden Betätigungsbereich (11) aufweist, wobei der Druckbereich (10) und der Betätigungsbereich (11) durch die Niete (6) voneinander abgegrenzt sind und gemeinsam wie ein zweiarmiger, insbesondere über die Niete (6) angelenkter, Hebel wirken.

10. Dose (1) Anspruch 10 oder 11, **dadurch gekennzeichnet, dass** das Öffnungselement (4) ein gegenüber seinem Körper verschwenkbares Verbindungselement (12) aufweist, das mittels der Niete (6) mit der Stirnwand (14) der Dose (1) verbunden ist.

11. Dose (1) nach einem der Ansprüche 1 bis 10, **dadurch gekennzeichnet, dass** in Ausgangslage (AL) des Öffnungselements/Trägerkörpers (4) der Transponderchip (9) in einem Bereich desselben angeordnet ist, der am Verschlussbereich (2) anliegt.

12. Dose (1) nach einem der Ansprüche 1 bis 11, **dadurch gekennzeichnet, dass** die Antenne (8) ringförmig ausgebildet ist und insbesondere entlang der Umfangskante des Öffnungselements (4) in einer Einkerbung desselben angeordnet ist.

## Claims

1. A can (1), in particular a beverage can, comprising a body, in particular made from aluminium, wherein a closure region (2) on an end wall (14) of the can (1) is at least partially delimited by a predetermined breaking edge (3) and wherein the can (1) comprises an opening element (4), in particular an annular loop, which in the starting position (AL) thereof lies at least partially flat against the end wall (14) of the can (1) and is connected to the end wall (14) at at least one position by means of a connecting element (12), which is formed as part of the opening element (4) and is connected with the end wall (14),
- wherein on lifting or pivoting the opening element (4) upwards away from the end wall (14) of the can (1), thus out of the starting position (AL) into the opening position (OL), the closure region (2) is torn off at the predetermined breaking edge (3) and the can is designed for the emptying of the contents thereof in the region of the opening (7) of the can (1) bounded by the predetermined breaking edge (3),
- wherein the opening element (4) of the can (1) also comprises an annular carrier body that is closed in itself, and is preferably designed as such per se, which consists entirely, or in a subregion, of an electrically conductive material, in particular a metal, and forms a ring, electrically closed in itself, in the above-mentioned starting position (AL) of the opening element (4), and
- on or in which carrier body, are arranged an antenna (8) and a transponder chip (9) connected to same,
**characterised in that**,
- under the external influence of an alternating magnetic field, emitted for example by an external data communication device, by means of which currents can be induced in the carrier body in the starting position (AL) at a magnitude by means of which said externally acting alternating magnetic field can be weakened in such a way that the electrical voltage induced thereby is too low to activate the transponder chip (9) and such an activation does not result or is prevented,
- **in that** after lifting or pivoting the opening element/carrier body (4) upwards from the end wall (14) of the can (1) in the course of opening same, the electrical ring closure in the carrier body can be irreversibly altered, in particular interrupted, and thus cancelled, such that the current induced in the carrier body by the externally acting alternating magnetic field can no longer be formed with a sufficient degree of strength and/or distribution for the above-mentioned prevention of the actuation of the transponder chip (9).

2. The can according to claim 1, **characterised in that** the annular opening element/carrier body (4) closed in itself is formed with a predetermined breaking point (40) that remains electrically conductive ensuring the intact ring closure of the same in the starting position (AL), which, on actuation of the opening element (4) by pivoting upwards from the end wall (14) of the can (1), leads to the interruption and thus cancellation or extinguishing of the electrical ring closure as a result of breaking of the predetermined breaking point due to mechanical forces arising from the lifting of the opening element (4) from the can end wall (14) in the course of opening the can (1).

3. The can according to claim 1, **characterised in that** the annular opening element/carrier body (4) closed in itself comprises a preferably slot-like or gap-like interruption (43), which in the staring position (AL) of same, is bridged by a conductive bridging element (41), such as in particular by means of a short conductor or solder piece that is self tearing or can be torn off as a result of the application of force on actuation of the opening element (4) in the course of opening the can (1), and thereby cancelling or eliminating the ring closure, or such a conductor bridge made from a conductive adhesive, paste or dye.

4. The can according to claim 1 or 3, **characterised in that**,
- the annular opening element/carrier body (4) closed in itself comprises a, preferably slot-like or gap-like, interruption (43), which in the starting position (AL) of same, is bridged by means of a conductive bridging element (41), such as in particular a conductor or solder piece, or such a conductor bridge made from a conductive adhesive, paste or dye, which bridging element (41) is in turn connected, via a tensioned tensile-resistant and tear-resistant pull member (42), such as, in particular, a thread, wire, chain or strip, to the stable end wall (14), in particular to the connecting element (12) between can (1) and opening element (4), and
- **in that** with the connecting piece (42) on actuation of the opening element (4) by pivoting upwards of same from the end wall (14) of the can (1) in the course of opening the same, the conductive bridging element (41) is pulled out of its bridging position ensuring the electrical ring closure and removed, whereby the electrical ring closure inside the opening element/carrier body (4) is cancelled or eliminated.

5. The can (1) according to one of claims 1 to 4, **characterised in that** the antenna (8) and the transponder chip (9) are arranged on a common film, in particular on a common adhesive label (18), which is arranged on the opening element (4), in particular is glued there.

6. The can (1) according to one of claims 1 to 5, **characterised in that** at a transmission frequency of the transponder chips (9) in the range between 100 kHz and 1000 MHz, in particular in the range 120-135 kHz, in the range from 13 to 14 MHz or in the range 860-910 MHz, the specific electrical conductivity of the carrier material of the opening element (4) is greater than 1 S/m, and/or
- that the electrical permittivity of the carrier material of the opening element/carrier body (4) is less than 100*8.854*10⁻¹² Farad per metre (AS/Vm).

7. The can (1) according to one of claims 1 to 6, **characterised in that** the closure region (2) and the predetermined breaking edge (3) are formed on an end wall (14) of the can (1).

8. The can (1) according to one of the preceding claims 1 to 7, **characterised in that** the opening element (4) is connected to the can (1) by means of a rivet (6), wherein, the opening element (4) comprises a pressure region (10) contacting the closure region (2) in the starting position (AL) thereof for pushing in of the closure region (2).

9. The can (1) according to claim 8, **characterised in that** the opening element (4) comprises an actuation region (11) opposite the pressure region (10), wherein the pressure region (10) and the actuation region (11) are separated from each other by the rivet (6) and act together as a two-armed lever, in particular hinged by the rivet (6).

10. The can (1) according to claim 10 or 11, **characterised in that** the opening element (4) comprises a connecting element (12) that can be pivoted against the can body, that is connected to the end wall (14) of the can (1) by means of the rivet (6).

11. The can (1) according to one of claims 1 to 10, **characterised in that**, in the starting position (AL) of the opening element/carrier body (4), the transponder chip (9) is arranged in a region of same that is in contact with the closure region (2).

12. The can (1) according to one of claims 1 to 11, **characterised in that** the antenna (8) is annular and is arranged, in particular, along the circumferential edge of the opening element (4) in an indentation of same.

## Revendications

1. Canette (1), en particulier canette pour boisson, comprenant un corps, en particulier en aluminium, sur une paroi frontale (14) de la canette (1) est délimitée au moins en partie une zone de fermeture (2) par un bord de rupture (3), et la canette (1) présentant un élément d'ouverture (4), en particulier un étrier annulaire, qui repose dans sa position de sortie (AL) au moins à certains endroits à plat sur la paroi frontale (14) de la canette (1) et qui est relié à la paroi frontale (14) à au moins un endroit au moyen d'un élément de liaison (12) qui est conçu comme une partie de l'élément d'ouverture (4) et relié à la paroi avant (14),
- par soulèvement ou pivotement de l'élément d'ouverture (4) à partir de la paroi frontale (14) de la canette (1) vers le haut, c'est-à-dire à partir de la position de sortie (AL) dans la position d'ouverture (OL) la zone de fermeture (2) se rompt le long du bord de rupture (3) et dans la zone délimitée par le bord de rupture (3) se forme l'ouverture (7) de la canette (1) pour vider son contenu,
- en outre l'élément d'ouverture (4) de la canette (1) comprenant un corps de support annulaire fermé sur lui-même, et de préférence conçu comme tel, qui est composé en totalité ou partiellement d'un matériau électroconducteur, notamment en métal, et dans la position de sortie (AL) susmentionnée de l'élément d'ouverture (4) est fermé sur lui-même de manière annulaire électriquement, et
- sur ou dans le corps de support est disposée une antenne (8) et une puce transpondeur (9) raccordée à cette dernière,
**caractérisée en ce que**
- sous l'action d'un champ alternatif magnétique envoyé par exemple par un appareil de communication de données externe à partir de l'extérieur dans le corps de support se trouvant dans la position de sortie (AL), des courants peuvent être inductibles dans une certaine mesure, par lequel/lesquels le champ alternatif magnétique mentionné agissant depuis l'extérieur peut être atténué de sorte que la tension électrique induite par ce dernier pour l'activation de la puce transpondeur (9) soit trop faible et qu'une telle tension ne se produise pas ou soit empêchée,
- **en ce que** toutefois après le soulèvement ou le pivotement de l'élément d'ouverture/corps de support (4) par la paroi frontale (14) de la canette (1) vers le haut à la suite de l'ouverture de celle-ci, le bouclage électrique dans le corps de support est modifiable de manière irréversible, notamment interrompue et ainsi supprimée, de sorte que les courants induits dans le corps de support par le champ alternatif magnétique agissant depuis l'extérieur ne peuvent plus être suffisamment formés dans une grandeur suffisante de la puissance et/ou de la répartition pour empêcher, comme indiqué plus haut, l'activation de la puce transpondeur (9)

2. Canette (1) selon la revendication 1, **caractérisée en ce que** l'élément d'ouverture/corps de support (4) annulaire fermé sur lui-même est formé au moyen d'une ligne de rupture (40) demeurant électroconductrice, intacte, assurant son bouclage électrique dans la position de sortie (AL), ladite ligne de rupture cause au moment de l'actionnement de l'élément d'ouverture (4) par soulèvement de la paroi frontale (14) de la canette (1) vers le haut l'interruption, la suppression ou l'annulation du bouclage électrique suite à la rupture de la ligne de rupture par les forces mécaniques produites lors du soulèvement de l'élément d'ouverture (4) de la paroi frontale (14) de canette à la suite de l'ouverture de la canette (1).

3. Canette selon la revendication 1, **caractérisée en ce que** le corps de support/élément d'ouverture (4) annulaire fermé sur lui-même comprend une interruption (43), de préférence une fente ou un interstice, qui est comblée dans sa position de sortie (AL) par un élément de comblement (41) conducteur, comme en particulier au moyen d'un métal d'apport ou conducteur auto-déchirable ou détachable éliminant ou annulant ainsi le bouclage, en raison de la force appliquée lors de l'actionnement de l'élément d'ouverture (4) à la suite de l'ouverture de la canette (1) ou d'un étrier conducteur constitué de colle, pâte ou couleur conductrices.

4. Canette selon l'une des revendications 1 ou 3, **caractérisée** en ce
- le corps de support/élément d'ouverture (4) comprend une interruption (43), de préférence en forme de fente ou d'interstice, qui dans sa position de sortie (AL) est comblée au moyen d'un élément (41) de comblement conducteur, comme en particulier d'un métal d'apport ou conducteur ou d'un tel cavalier conducteur constitué de colle, de pate ou de couleur conductrices, ledit élément (41) de comblement quant à lui est relié par un organe (42) de traction résistant en traction et à la déchirure, comme en particulier un brin, un fil , une chaînette ou une bande à la paroi frontale (14) stable, en particulier à l'élément (12) de liaison entre la canette (1) et l'élément (4) d'ouverture, et
- en ce qu'avec la pièce de liaison (42) lors de l'actionnement de l'élément d'ouverture (4) lors de son pivotement de la paroi frontale (14) de la canette (1) vers le haut au cours de son ouverture, l'élément (41) de comblement conducteur se dégage de sa position de comblement assurant le bouclage électrique et se retire, éliminant ou supprimant ainsi le bouclage électrique à l'intérieur de l'élément d'ouverture/corps de support (4) .

5. Canette (1) selon l'une quelconque des revendications 1 à 4, **caractérisée en ce que** l'antenne (8) et la puce transpondeur (9) sont disposées sur une feuille commune, en particulier sur une étiquette adhésive (18) commune, qui est disposée, plus précisément collée, sur l'élément d'ouverture (4).

6. Canette (1) selon l'une quelconque des revendications 1 à 5, **caractérisée en ce qu'**à une fréquence de transmission de la puce transpondeur (9) dans la plage comprise entre 100 kHz et 1000 MHz, en particulier dans la plage comprise entre 120 et 135 kHz, dans la plage comprise entre 13 et 14 MHz ou dans la plage comprise entre 860 et 910 MHz, la conductibilité électrique spécifique du matériau de support de l'élément d'ouverture (4) est supérieure à 1 S/m, et/ou
- **en ce que** la permittivité électrique du matériau de support de l'élément d'ouverture/corps de support (4) est inférieure à 100*8,854*10⁻¹² Farad par mètre (AS/Vm).

7. Canette (1) selon la revendication 1 à 6, **caractérisée en ce que** la zone de fermeture (2) et le bord de rupture (3) sont formées sur une paroi frontale (14) de la canette (1).

8. Canette (1) selon l'une des revendications précédentes 1 à 7, **caractérisée en ce que** l'élément d'ouverture (4) est reliée par un rivet (6) à la canette (1), l'élément d'ouverture (4) comportant une zone de pression (10) dans sa position de sortie (AL) dans la zone de fermeture (2) destinée à enfoncer la zone de fermeture (2).

9. Canette (1) selon la revendication 8, **caractérisée en ce que** l'élément d'ouverture (4) comporte une zone d'actionnement (11) en regard de la zone de pression (10), la zone de pression (10) et la zone d'actionnement (11) sont délimitées l'une de l'autre par le rivet (6) et agissent conjointement comme un levier à deux bras articulé, notamment par le rivet (6).

10. Canette (1) selon la revendication 10 ou 11, **caractérisée en ce que** l'élément d'ouverture (4) comporte un élément (12) de liaison pivotant par rapport à son corps, qui est relié à la paroi frontale (14) de la canette (1) au moyen du rivet (6).

11. Canette (1) selon l'une des revendications 1 à 10, **caractérisé en ce que** dans la position de sortie (AL) de l'élément d'ouverture/corps de support (4) la puce transpondeur (9) est disposée dans une zone de celle-ci qui est adjacente à la zone de fermeture (2).

12. Canette (1) selon l'une des revendications 1 à 11, **caractérisée en ce que** l'antenne (8) est annulaire et est disposée notamment le long du bord périphérique de l'élément d'ouverture (4) dans une rainure de celui-ci.
